(19) Europäisches Patentamt
European Patent Office
Office européen des brevets

(11) **EP 0 737 774 B1**

(12) **EUROPEAN PATENT SPECIFICATION**

(45) Date of publication and mention
of the grant of the patent:
**25.03.1998 Bulletin 1998/13**

(51) Int Cl.⁶: **D21C 5/02**, D21F 1/82, D21H 17/01

(21) Application number: **96302569.7**

(22) Date of filing: **12.04.1996**

(54) **Process of treating reject from a plant for deinking waste paper**

Verfahren zur Behandlung des Abfalles aus einer Anlage zum Deinken von Altpapier

Prodédé pour le traitement de déchets d'une installation de désencrage de vieux papier

(84) Designated Contracting States:
**AT BE CH DE DK ES FI FR GB IT LI NL PT SE**

(30) Priority: **13.04.1995 GB 9507710**

(43) Date of publication of application:
**16.10.1996 Bulletin 1996/42**

(73) Proprietor: **ECC INTERNATIONAL LIMITED**
**Theale, Reading, Berkshire RG7 4SA (GB)**

(72) Inventors:
• **Bleakley, Ian Stuart**
**Par, Cornwall PL24 2SQ (GB)**
• **Toivonen, Hannu Olavi Ensio**
**Par, Cornwall PL24 2SQ (GB)**

(74) Representative: **McCormack, Derek James**
**ECC International Ltd,**
**Patents Department,**
**c/o John Keay House**
**St Austell, Cornwall PL25 4DJ (GB)**

(56) References cited:
**WO-A-93/02967**          **US-A- 4 115 188**

• **DATABASE WPI Section Ch, Week 8129 Derwent Publications Ltd., London, GB; Class E37, AN 81-52380D XP002008649 & JP-A-56 063 089 (OJI PAPER KK) , 29 May 1981**

Printed by Jouve, 75001 PARIS (FR)

**Description**

This invention relates to a process for treating waste paper and, more particularly but not exclusively, is concerned with a process for recovering a useful product from suspensions, or slurries, which contain particulate material and which are derived from a plant for treating waste paper, for example a plant for de-inking printed waste paper, de-inking plant waste being especially difficult to treat.

A process for converting waste paper into a pulp suitable for re-use will often include one or more operations designed, for example, to separate printing ink from the cellulosic fibres in the waste paper. Generally, in a plant for de-inking waste paper, the waste paper is first pulped, for example in a pulper provided with a low attrition rotor, in water containing various chemical reagents, at a consistency which is usually in the range from about 8 to about 18% by weight of dry waste paper. The chemical reagents used generally include sodium hydroxide which causes the fibres to swell and saponifies most commonly used printing ink vehicles, sodium silicate which acts as a pH buffer and agglomerates detached ink particles to a convenient size, and a surfactant which aids wetting and dispersion of the ink particles. The pulper is generally operated at a temperature in the range from 55 to 70°C and at a pH in the range from 9 to 11. On completion of the pulping operation the pulp is usually diluted with water to about 4 - 5% by weight of dry solids and then reconcentrated to a consistency of about 14-16% by weight of dry solids: the dilution and subsequent reconcentration is advantageous because the dilute suspension is easier to pump from the pulper to the next stage, and because it makes it possible to return a proportion of the hot water and chemicals to the pulper.

The pulp suspension is then passed to a system of screens which remove relatively heavy foreign bodies, such as staples, paper clips and particles of grit, and also light-weight contaminants, such as plastics materials, and "stickies" which arise from adhesives used in paper coating, binding or laminating, and from hydrophobic reagents, such as sizing agents.

The suspension passing through the screens is then fed to a treatment plant which usually comprises one or more froth flotation cells, or one or more washing units, or a combination of flotation cells and washing units.

For example, a typical treatment plant might comprise one or more froth flotation cells, each of which is provided with an impeller and means to introduce air in the form of fine bubbles in the vicinity of the impeller. An additional chemical, known as a collector, is added to the pulp suspension prior to the flotation operation. The collector may be, for example, a fatty acid soap or a nonionic surfactant such as an ethylene oxide/propylene oxide copolymer. The collector attaches itself preferentially to the ink particles, rendering them hydrophobic, so that they have greater affinity for the air bubbles than for the water, and are lifted to the surface by the bubbles as they rise through the suspension. It may be necessary, in order to provide a sufficiently stable foam, to add also a water-soluble calcium salt to ensure that the water has a hardness of at least 200mg of $CaCO_3$. Ink particles having sizes in the range from about 20$\mu$m to about 200$\mu$m are concentrated in the froth which overflows from the top of the flotation cells, while a pulp suspension depleted in ink is withdrawn from the bottom. The pulp suspension from the bottom of the flotation cells is then washed with water, and subsequently dewatered, to remove as much as possible of the remaining ink residue. The dewatered pulp is then generally dispersed with a surfactant, which may be, for example, of the nonylphenol ethoxylate or ethoxylated alcohol type. The dispersion is effected by treating the mixture of pulp and dispersing agent with steam to raise its temperature to a value within the range 50 - 90°C, and subjecting the hot mixture to intense mechanical agitation whereby remaining ink particles are generally reduced in size to below about 20$\mu$m, at which size they remain in suspension and become invisible to the naked eye. The pulp containing finely dispersed ink particles is then passed through a fine slotted screen to remove any agglomerates or remaining sticky or resinous material and finally dewatered to produce a substantially de-inked pulp. The water recovered from the dewatering operations is generally cloudy as a result of its content of fine particulate material which may comprise, for example, inorganic filler particles or organic particles such as ink or fine fibres. It is necessary to remove as much as possible of this particulate material before this water is suitable for recycling for use in earlier stages of the de-inking process. The cloudy water may be cleaned, for example, in microflotation cells in which fine bubbles of air are injected at the base of the cells and the particulate material is carried upwards by air bubbles which attach themselves thereto, and is discharged at the top of the cells in the froth.

The treatment plant reject, which is usually in the form of a suspension, or slurry, comprising the froth product from a flotation stage or the suspension that has passed through the screen of a washing stage, generally contains, in addition to the ink particles, a substantial proportion of the inorganic filler particles which were originally present in the waste paper. These filler particles generally consist predominantly of a mixture of kaolin clay and calcium carbonate in various proportions, although other inorganic filler particles such as talc, calcium sulphate or titanium dioxide may also be present in minor proportions. Hitherto, this treatment plant reject has had to be discarded as waste because of its very dark colour as a result of its high content of printing ink residues. There has, therefore, been a loss to the paper maker of potentially useful inorganic particulate materials. Also, the paper maker has had to meet the expense of disposing of the treatment plant reject in a manner which has no undesirable effects on the environment.

US4,115,188 describes a process for chemically treating waste water from a paper mill. In the disclosure in this prior patent it is stated that the waste water treated may be "from the various pulpings, refinings, deinkings, cleanings, dilutions, etc., involved in either a primary or secondary paper mill paper-making process". The darkness of the waste water treated is not discussed. In the described process, the waste water is treated by adding an acid, preferably sulphuric acid, and then adding an alkali, preferably calcium hydroxide. The changes in pH produced cause the solids suspended in the waste water to be flocculated which allows them to be more easily separated eg. by filtration, decantation, sedimentation etc. thereby allowing the waste water to be clarified. The patent description contemplates the possibility of utilising the separated solids in a number of ways, including providing a pulp source for low grade paper which may be re-used in the paper making process. The patent description contemplates the formation of some calcium sulphate as "ash" as part of the separated solids. However, such formation appears not to be deliberate but rather to be incidental to the flocculation effect caused by pH changes. In any case, in the preferred embodiment of the patent description 320 parts per million $H_2SO_4$ and 250 parts per million slaked lime are added which will produce $CaSO_4$ in a concentration of about 500 parts per million. $CaSO_4$ has an appreciable solubility in water, viz about 1600 parts per million at room temperature. Therefore all $CaSO_4$ produced as in the preferred embodiment of the prior art is likely to dissolve rather than precipitate. The amount of added acid and alkali in the preferred embodiment suggest that the solids concentration of the treated waste water is about 0.1% to 0.2% by weight.

According to the present invention there is provided a method of treating reject from a plant for de-inking waste paper which reject comprises a mixture of ink particles, inorganic particles and fibres, which method includes the steps of chemically treating an aqueous suspension or slurry comprising said reject to aggregate the suspended solids therein, the chemical treatment including adding a source of alkaline earth metal ions to the aqueous suspension or slurry, characterised in that the chemical treatment comprises also adding to the aqueous suspension or slurry carbon dioxide to form therein a precipitate comprising a white substantially insoluble alkaline earth metal carbonate compound which entrains material comprising ink particles, inorganic particles and fibres contained in said reject, whereby the darkness of the reject is reduced by formation of the precipitate. The precipitated compound may be formed in a known way. Addition of a carbon dioxide containing fluid to an alkaline earth metal hydroxide in the said suspension is preferred to form an alkaline earth metal carbonate. This is facilitated by the availability, relative cheapness and ease of applicability of these reagents and the neutral and fine nature of the product so formed.

The particulate material and fibres, eg. cellulose fibres present in de-ink reject sludge consists predominantly of "fines", in other words the material which, according to TAPPI Standard No.- T 261 cm-90, will pass through a round hole of diameter 76μm. Generally, the particulate and fibrous material present in the sludge will contain at least 75% of, and usually will consist substantially completely of, particles and fibres that will pass through a round hole of diameter 76μm.

Surprisingly, it has been found that the method according to the present invention can be used to obtain from a de-inking plant waste which has a noticeable grey colour, a particulate product which is sufficiently light in colour to be useful for recycling for re-use, eg. in a paper making process.

Thus, surprisingly and beneficially the present invention allows useful material to be recovered from de-inking reject sludge without having to separate the ink from other material in the reject, and allows the cost of disposing of such sludge to be reduced or eliminated.

The method of forming a precipitate in an aqueous suspension to entrain fines therein is described in Applicant's EP 0604095. Use of the method to treat the effluent white water from a paper making process is described in Applicant's EP 658606 published after the priority date of the present Application. However, use of that method to treat the dark ink-containing reject material from a de-inking plant is not disclosed or suggested in the said published specifications. Such method provides an example of a way of carrying out the present invention.

The precipitate product obtained by the method according to the present invention may be useful with or without further processing and with or without addition to other materials in any of the various applications in which particulate inorganic materials are known to be useful, eg. as compositions for adding as pigments, fillers or extenders for adding to paper, paper coatings, polymers, plastics, paints and the like.

Such product will include in addition to the precipitate material, eg. calcium carbonate, formed in the suspension entrained and aggregated particles and fibres contained in the suspension treated possibly together with precipitated material originally contained in solution in the water-based medium from which the suspension is formed. The entrained and aggregated particles will include ink particles as well as inorganic particulate materials employed as coating and/ or fillers in the paper forming the original waste material, eg. particles of one or more of kaolin, metakaolin, calcium carbonate, calcium sulphate, titanium dioxide, mica and talc.

The composition of the solid content of the product formed by the method according to the present invention may comprise from 5% to 95% by weight precipitate and from 95% to 5% by weight particles and fibres entrained or aggregated into the precipitate.

As an example of re-use of the product of the method according to the present invention, a paper coating composition may be formed using the product by mixing an aqueous suspension of pigment material comprising the product optionally together with other pigments together with an adhesive. The other pigments may for example comprise one or more of kaolin, calcium carbonate (which may be ground or precipitated), calcium sulphate, mica, titanium dioxide and talc. The adhesive may form from 4% to 20% by weight based on the total dry weight of pigment or pigments present. The adhesive may be one of the known paper coating adhesives employed in the art, eg. chosen from the group consisting of starches, proteinaceous adhesives such as casein and latices of, eg. styrene butadiene rubbers and acrylic polymers. The paper coating composition may also include a thickener, eg. in an amount of up to 2% by weight based upon the total dry weight of pigment or pigments present. The thickener may comprise one or more substances employed as thickeners in the prior art, eg. sodium carboxymethyl cellulose or synthetic acrylic thickeners.

The paper coating composition may be formed by mixing together an aqueous suspension of the product of the method according to the present invention, preferably also containing a dispersant, eg. a polycarboxylate such as polyacrylate, optionally with one or more further aqueous dispersed suspensions containing other pigments, with the adhesive and any other optional constituents eg. thickener, in a manner familiar to those skilled in the art.

Where the product of the method according to the present invention is to be used as a filler for material such as paper, plastics, paint, polymers and the like the amount of filler employed comprising the product with or without other filler material is the same as may be employed in the prior art in similar uses of filler material, eg. the filled material may comprise up to 40% by weight filler particles including the said product and from 100 to 60% by weight material to be filled.

The aqueous suspension in which the de-inking reject is treated in the method according to the present invention may comprise slurry or sludge obtained from a flotation process in a de-inking plant. For example, the aqueous suspension in which the insoluble salt is precipitated may comprise the froth product recovered from the microflotation cells which are used to treat the water separated from the pulp in various stages of a process for preparing a useful sheet forming material from waste paper, and especially from printed waste paper.

Alternatively, the aqueous suspension in which the insoluble salt is precipitated may comprise the froth product from the main flotation stage of a plant for de-inking office waste paper, as this generally contains less ink residue than water paper from other sources. When the product comprising precipitate of insoluble salt and entrained fine particles is intended for recycling to a plant producing newsprint, the aqueous suspension which is treated in accordance with the invention may be the dilute suspension which is obtained as a result of washing the dewatered pulp obtained from the underflow product of the main flotation stage.

The aqueous suspension constituting the slurry to be treated may generally contain between about 2% and 10% by weight of solid material. Such a dilute suspension of fine particles is normally difficult to separate into its liquid and solid components.

The product comprising the precipitate alkaline earth metal carbonate and entrained fine particulate and fibrous material, which is produced by the method according to the present invention, where re-used in paper making, may for example be used to supplement the particulate filler which is added to cellulosic fibre material in a paper sheet-forming process.

Also, the water separated from the suspension containing the precipitate, eg. alkaline earth metal carbonate and entrained fine particulate material, may be used in an earlier stage of a waste paper pulping plant or in an sheet-forming mill.

The precipitate formed in the method according to the present invention which comprises an alkaline earth metal carbonate, may be formed as noted above by introducing into the reject slurry to be treated a source of alkaline earth metal ions and a source of carbonate ions comprising carbon dioxide. These will form the desired precipitate of alkaline earth metal carbonate in situ which will entrain the fine particles and fibres in the slurry. The first reagent which is added is preferably uniformly dispersed throughout the slurry to avoid local concentration gradients.

The source of alkaline earth metal ions may comprise calcium hydroxide.

It may be obtained by slaking of the corresponding alkaline earth metal oxide. This may be carried out at ambient temperature, but it is preferably carried out by heating to a temperature in the range of from 30 to 70°C, and the suspension of the alkaline earth metal oxide in the water is preferably agitated vigorously for a time of up to 30 minutes to ensure that slaking is complete.

When the alkaline earth metal is calcium and the source of carbonate ions is a carbon dioxide-containing gas, the production of calcium carbonate in the scalenohedral form is favoured by maintaining the temperature of the mixture of used water and calcium hydroxide in the range of from 20 to 65°C. The carbon dioxide-containing gas is preferably 100% $CO_2$ although it may contain from 5% to 100% by volume of $CO_2$ and other suitable gas, eg. air or nitrogen.

The quantity of the source of alkaline earth metal ions and of the source of carbonate ions used is preferably such as to precipitate sufficient alkaline earth metal carbonate to give a weight ratio of alkaline earth metal carbonate to fine particulate material in the range from 10:90 to 90:10, and most preferably in the range 30:70 to 70:30. The suspension containing the precipitate of alkaline earth metal carbonate and entrained fine particulate material may be recycled directly in its relatively dilute form to supplement the filler being used in a sheet forming process. Alternatively, the suspension containing the precipitate may be dewatered by any conventional method, for example by sedimentation, by pressure filtration, or in a centrifuge.

The suspension of the precipitate of alkaline earth metal carbonate and entrained fine particles is found to be very much easier to dewater than the original suspension of the fine particulate material alone, because, when a cake of the precipitate is formed by filtration or by centrifuging, the packing of the particles is such that the cake is very much more permeable to water than is a cake formed from the solid component of the used water alone. Also, the precipitate, in many cases, is found to have advantageous light scattering properties which make is suitable for use as a filler in a paper- or board-making process. The precipitate may also find use as a filler, for example, in polymeric compositions such as carpet backing compositions.

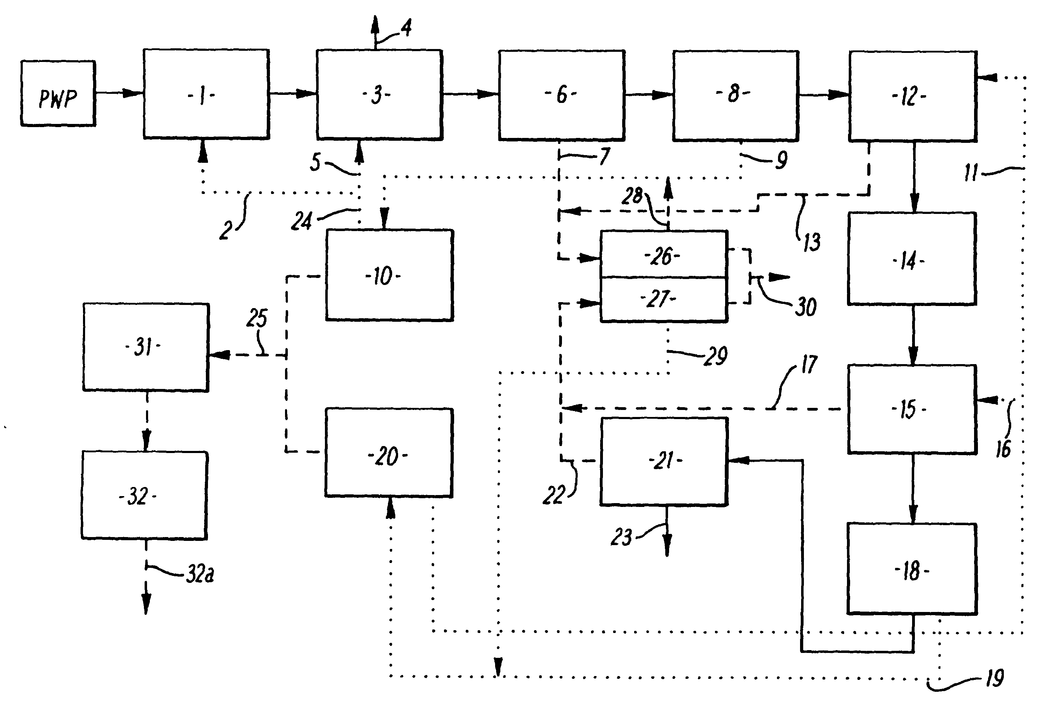

The invention will now be illustrated, by way of example, by reference to the accompanying drawing and Examples. The drawing is a flow diagram of a de-inking plant for recovering re-usable cellulosic material from printed waste paper, modified in accordance with the present invention.

Printed waste paper, PWP, is pulped in a pulper 1 with water containing sodium hydroxide, sodium silicate and a dispersing agent. Most of the water used has been recycled to the pulper from a later stage in the process through a conduit 2, as will be explained below. The pulp prepared in the pulper is passed through a screening system 3 which removes at 4 large items of contamination such as staples, paper clips and pieces of grit, and also a substantial part of the low density contaminants such as particles of plastics materials, and agglomerates of sticky material derived from adhesives, sizing reagents and pitch. Recycled water from a later stage in the process is delivered through a conduit 5 to assist the passage of fibres and fine particles through the screens and the discharge to waste of coarse materials retained on the screens.

A collector reagent is then added to the aqueous suspension which has passed through the screening system, and the suspension is subjected to froth flotation in one or more flotation cells 6. A substantial proportion of the ink particles in the size range from 20 to 200μm in the suspension are removed in the froth which overflows from the top of the cells at 7 and a product depleted in ink is withdrawn from the bottom of the cells and transferred to a dewatering stage 8. In this stage cloudy water containing fine organic and inorganic particles is separated from the pulp and transferred through a conduit 9 to a first microflotation stage 10. The thickened pulp from the dewatering stage 8 is diluted with recycled water supplied through a conduit 11 and is washed on fine screens 12. Washing reject passing through the screens is removed through a conduit 13. A further dose of a dispersing agent is added, if necessary, to the pulp which is retained on the screens 12, and the pulp then enters a dispersion stage 14 where it is subjected to intense mechanical agitation in which any remaining ink agglomerates are broken down to particles not larger than about 20μm and are prevented from reagglomerating. The dispersed suspension is then passed through a second screening stage 15 which removes any remaining coarse particles and agglomerates and discharges their through a conduit 17. The screens are supplied with recycled water through a conduit 16 to assist the separation process.

The aqueous suspension passing through the screens is then subjected to a second dewatering stage 18. Cloudy water containing fine organic and inorganic particles is withdrawn from this stage through a conduit 19 to a second microflotation stage 20. The dewatered pulp is washed on a further set of fine screens 21 and the washing reject which passes through the screens is discharged through a conduit 22. The pulp which is retained on the screens 21 is discharged at 23. This pulp is substantially free of ink particles and is suitable for use as a source of cellulosic fibres in a sheet forming process.

The froth product from the flotation stage 7 and the washing reject which passes through the screens 12 pass through conduits 7 and 13, respectively, to a dewatering stage 26, from which cloudy water is discharged through a conduit 28 to join the cloudy water flowing through conduit 9 to the microflotation stage 10. A suspension of the coarse particles and agglomerates which were retained on the screens 15 flows through a conduit 17, together with the washing reject passing through screens 21 and flowing through conduit 22, to a dewatering stage 27, from which cloudy water is discharged through a conduit 29 to join the cloudy water flowing through conduit 19 to the microflotation stage 20. A thickened effluent material is discharged from the dewatering stages 26 and 27 at 30.

The cloudy water passing through conduits 9 and 28 to microflotation cell 10, and through conduits 19 and 29 to microflotation cell 20, is charged with compressed air which comes out of solution as the cloudy water enters the base of the microflotation cells in the form of very fine bubbles which pass up through the cells carrying with them most of the suspended particulate material. A flocculant, such as polyacrylamide, may be added to the cloudy water entering the microflotation cells to cause the fine particles to clump together. Bentonite may also be added to adsorb and remove any sticky material present in the cloudy water. Clarified water is discharged from the bottom of microflotation cell 10 through conduit 24 to supply the pulping stage 1 and the first screening stage 3 through conduits 2 and 5, respectively. Similarly, clarified water is discharged from the bottom of microflotation cell 20 to the screening stages 12 and 15 through conduits 11 and 16, respectively. The froth product overflowing from the top of microflotation cells 10 and 20 at 25, which product comprises an aqueous suspension containing from about 2% by weight to about 8% by weight of fine organic and inorganic particles, is treated, in accordance with the invention, with calcium hydroxide in mixing tank 31 and the treated suspension is carbonated with carbon dioxide-containing gas in a reaction vessel 32, as described in the following Examples Output product is extracted via outlet 32a.

**EP 0 737 774 B1**

Example 1

The froth product from the microflotation cells 10 and 20 of a de-inking plant producing waste paper pulp for use in making newsprint consisted of an aqueous suspension containing 6.74% by weight of dry solids.

A sample of the aqueous suspension was diluted with water to a dry solids content of 1.3% by weight. The temperature of the sample was raised to 50°C and there was added to the sample sufficient of a suspension containing 148g of calcium hydroxide per litre to provide, after carbonation with a carbon dioxide-containing gas, a weight of calcium carbonate equal to the weight of fine dry solid material in the sample. In other words, there was added sufficient of the calcium hydroxide suspension to provide 14.8g of calcium hydroxide per litre of the sample. A gas containing 20% by volume of carbon dioxide, the remainder being air, was then admitted into the mixture of the froth product and calcium hydroxide, the temperature of the mixture being maintained at 50°C, at a rate sufficient to supply 0.048 moles of carbon dioxide per minute per mole of calcium hydroxide. The gas was passed through the mixture until the pH fell to 7.0 which corresponded to a time of about 20 minutes. An aggregated crystalline precipitate was formed, and samples of the aqueous suspension of this product, which resulted from the carbonation of the mixture of the froth product and calcium hydroxide, and which contained 2.6% by weight of dry solids, were tested for filtration rate and, after filtration and drying of the dry solid material in the suspension, for the brightness of the dry solids. Samples of the froth product before treatment were tested in the same way. The results obtained are set forth in Table 1 below:

Table 1

|  | Before treatment | After treatment |
|---|---|---|
| Mineral content (% by weight) | 49.4 | 72.8 |
| $CaCO_3$ content (% by weight) | 11.4 | 53.3 |
| Kaolin content (% by weight) | 38.0 | 19.5 |
| Brightness (%) | 41.6 | 66.2 |
| Filtration rate | 0.06 | 0.45 |

The brightness of the dry solids was determined by measuring the reflectance of a prepared surface of the dried solids to light of wavelength 457nm with a Carl Zeiss "ELREPHO" brightness meter and comparing the result with the reflectance of light of the same wavelength from an ISO standard brightness surface.

The filtration rate was measured by the procedure which was described in Appendix 1 below.

Hand sheets of paper filled with the aggregated crystalline precipitate obtained as described above were prepared in the following way. 2 litres of a suspension of a thermomechanical pulp containing 3.56% by weight of dry pulp was diluted to 10 litres with filtered water and was then disintegrated for 10 minutes in a turbine mixer, the impeller rotating at a speed of 1500rpm. At this stage the stock contained approximately 0.7% by weight of dry pulp and the Canadian Standard Freeness was 130. The volume of stock was made up to 20 litres with filtered water and the consistency was checked by forming a paper sheet from a small sample by draining on a suitable wire screen and drying and weighing the sheet thus formed water was added if necessary to reduce the consistency to 0.3% by weight of dry pulp.

There was then added to the paper making stock thus formed and stirred in by hand sufficient of an aqueous suspension of the aggregated crystalline precipitate to provide 4% and 8% by weight, respectively, of the total dry solid material in the paper making stock. This was followed by the addition of 0.02% by weight, based on the total weight of dry solid material in the stock, of a retention aid.

Hand sheets were prepared from the filler-containing paper making stock according to the procedure laid down in TAPPI Standard No. T205 om-88, "Forming handsheets for physical tests of pulp". For each hand sheet a sample of the stock was poured into the sheet forming machine and surplus water was removed.

The brightness, or percentage reflectance to violet light of the hand sheets was measured by means of a DATACOLOR 2000 brightness meter fitted with a No. 8 filter (457nm wavelength).

The opacity of each sample of paper was measured by means of the DATACOLOR 2000 brightness meter fitted with a No. 10 filter (a green filter embracing a broad spectrum of wavelengths). A measurement of the percentage of the incident light reflected was made with a stack of ten sheets of paper over the black cavity of the brightness meter ($R_{oo}$). Of these ten sheets, the top five were from the sample of paper currently under test, and the remaining five were sheets from other samples which were used merely to ensure that the stack was completely opaque. The ten sheets were then replaced with the single sheet from the top of the stack of five test sample sheets over the black cavity and a further measurement of the percentage reflectance was made (R). The percentage opacity was calculated from the formula:

$$\text{Percentage opacity} = 100.R/R_{oo}$$

The procedure was performed five times with each time a different sheet of paper on top of the stack, and the complete sequence of steps was then repeated to give a total of ten results from which the average value of the percentage opacity was determined.

The hand sheets from each batch were also tested for bursting strength by the test prescribed in TAPPI Standard No. T403 om- 85. The bursting strength is defined by the hydrostatic pressure in kilopascals required to produce rupture of the material when the pressure is increased at a controlled constant rate through a rubber diaphragm to a circular area of the paper 30.5mm in diameter. The area of the material under test is initially flat and held rigidly at the circumference but is free to bulge during the test. Samples of each sheet were also weighed dry, the weight of the dry sample being used to determine the weight per unit area of the paper in grams per square metre. The burst strengths were divided by the weight per unit area of the paper to give a burst ratio.

As a comparison, the experiment described above was repeated, but using as the filler in the paper making composition 4% and 8%, respectively, by weight of a precipitated calcium carbonate filler having a particle size distribution such that the weight median particle diameter was 3.0μm.

As a further comparison, hand sheets were prepared from paper making stock which contained no filler and subjected to the same tests as are described above.

The results obtained are set forth in Table 2 below. For the hand sheets prepared from stock containing filler, the burst ratio was expressed as a percentage of the value obtained for the unfilled hand sheets.

Table 2

| Filler | | Brightness % | Opacity % | Burst ratio (% of value for unfilled sheet |
|---|---|---|---|---|
| Unfilled | | 59.6 | 90.8 | 100 |
| Precipiated calcium carbonate | 4% | 59.9 | 91.8 | 95.7 |
| | 8% | 59.8 | 91.2 | 86.9 |
| Aggregated crystalline filler | 4% | 57.0 | 92.8 | 97.3 |
| | 8% | 55.9 | 93.2 | 90.3 |

These results show that although the brightness values achieved when the aggregated crystalline material is used as the filler are not as good as those obtained with the proprietary filler, the aggregated crystalline material shows a better opacity and causes a smaller reduction in the strength of the paper than the proprietary filler.

Example 2

Samples were taken of the froth product from the microflotation cells of a different de-inking plant, and the experiment described in Example 1 was repeated. The solids content of the froth product was found to be 6.8% by weight, and the solids content of the suspension of aggregated crystalline filler which was produced after dilution of the froth product to a dry solids content of 2.25% by weight of dry and carbonation with a carbon dioxide- containing gas as described in Example 1 was 4.5% by weight. The properties of the solids in the initial froth product and in the suspension of the aggregated crystalline filler, and the filtration rates of the two suspensions, are set forth in Table 3 below:

Table 3

| | Before treatment | After treatment |
|---|---|---|
| Mineral content (% by weight) | 52.7 | 74.7 |
| $CaCO_3$ content (% by weight) | 12.3 | 54.3 |
| Kaolin content (% by weight) | 40.4 | 20.4 |
| Brightness (% ISO) | 51.0 | 69.2 |
| Filtration rate | 0.03 | 0.26 |

The properties of hand sheets prepared and tested as described in Example 1 and containing the aggregated crystalline filler in accordance with the invention, the proprietary precipitated calcium carbonate, and no filler, respectively, are set forth in Table 4 below:

Table 4

| Filler | | Brightness | Opacity | Burst ratio (% of value for unfilled sheet) |
|---|---|---|---|---|
| Unfilled | | 59.6 | 90.8 | 100 |
| Precipitated calcium carbonate | 4% | 59.9 | 91.8 | 95.7 |
| | 8% | 59.8 | 91.2 | 86.9 |
| Aggregated crystalline filler | 4% | 59.6 | 92.8 | 95.7 |
| | 8% | 60.4 | 93.6 | 88.8 |

Appendix 1

Filtration rate measurement method

A small sample of the suspension of the mixed mineral produced was poured into a Buchner filter funnel provided with a piece of standard filter paper, the side arm of the filtrate flask being connected to the laboratory vacuum source. The filtrate was collected in a measuring cylinder inside the filtrate flask, and at intervals the volume of filtrate collected and the time which had elapsed since the start of filtration were recorded. The square of the volume collected was plotted graphically against the elapsed time, and a curve was obtained which had a large central straight line portion. The slope of this straight line portion was recorded in each case.

The relationship between the square of the volume of filtrate collected and the elapsed time is given by the Carmen-Kozeny equation:-

$$\frac{Q^2}{T} = \frac{2.A^2.P.E^3.(y-1)}{5.v.S^2.(1-E)^2.d^2}$$

where:

Q is the volume of filtrate collected;
T is the elapsed filtration time;
A is the area of the filter medium;
P is the differential pressure across the filter medium;
E is the fraction of voidage in the tilter cake;
v is the viscosity of the suspending medium;
S is the specific surface area of the particulatf phase; and
d is the specific gravity of the particulate phase.

The slope $Q^2/T$ of the straight line portion of the graph plotted for each suspension gives a measure of the filtration rate in each case and, since A, P, v, S and d can be assumed to be constant under the conditions of the experiment, a standardised filtration rate F can be found to be given by:

$$F = \frac{Q^2.R}{T}$$

where:

$$R = \frac{\dfrac{1}{d} + \dfrac{W_c}{S_c}}{\dfrac{W_s}{S_s} - \dfrac{W_c}{S_c}}$$

where:

$W_c$ is the weight fraction of water in the cake;
$S_c$ is the weight fraction of solids in the cake
$W_s$ is the weight fraction of water in the suspension; and
$S_s$ is the weight fraction of solids in the suspension.

**Claims**

1. A method of treating reject from a plant for de-inking waste paper which reject comprises a mixture of ink particles, inorganic particles and fibres, the method including the step of chemically treating an aqueous suspension or slurry comprising said reject to aggregate the suspended solids therein, the chemical treatment including adding a source of alkaline earth metal ions to the aqueous suspension or slurry, characterised in that the chemical treatment comprises also adding to the aqueous suspension or slurry carbon dioxide to form therein a precipitate comprising a white substantially insoluble alkaline earth metal carbonate compound which entrains material comprising ink particles, inorganic particles and fibres contained in the reject, whereby the darkness of the reject is reduced by formation of the precipitate.

2. A method as claimed in claim 1 and wherein the precipitate comprises calcium carbonate formed by reacting carbon dioxide with calcium hydroxide in the said suspension.

3. A method as claimed in claim 1 and wherein the precipitate and entrained material therein is recycled for re-use as a particulate coating or filler material.

4. A method as claimed in claim 3 and wherein the precipitate and entrained material is recycled directly in relatively dilute form to supplement the filler used in a sheet forming process.

5. A method as claimed in claim 3 and wherein the aqueous suspension containing the precipitate and entrained material is dewatered.

6. A method as claimed in claim 1 and wherein the precipitate and entrained material is separated from water of the aqueous suspension and the water after separation is clearer than when originally treated to produce precipitation therein and is recycled for re-use.

7. A method as claimed in claim 1 and wherein the said reject is a slurry or sludge produced from a flotation process of a waste paper de-inking plant.

8. A method as claimed in claim 1 and wherein the aqueous suspension or slurry in which the precipitate is to be formed contains between 2% and 10% by weight of solid material.

9. A method as claimed in claim 1 and wherein the precipitate and entrained material contains from 5% to 95% by weight precipitated material and from 95% to 5% by weight of material entrained therein.

10. A method as claimed in claim 9 and wherein the weight ratio of precipitate formed to fine particulate material entrained by the precipitate is in the range of from 30:70 to 70:30.

11. A product comprising a substantially white precipitate comprising an alkaline earth metal carbonate having entrained therein ink particles, inorganic particles and fibres, wherein the product has been formed by the method claimed in any one of the preceding claims.

12. Use of a product as claimed in claim 11 as an inorganic particulate coating, filling or extending material.

13. A composition for paper making comprising cellulosic fibres coated or filled with material comprising the product claimed in claim 11.

**Patentansprüche**

1. Verfahren zur Behandlung des Rückstands aus einer Anlage zum Deinken von Altpapier, wobei der Rückstand ein Gemisch aus Farbpartikeln, anorganischen Partikeln und Fasern umfasst, und den Schritt vorsieht: chemisches Behandeln einer den Rückstand enthaltenden wässrigen Suspension oder Aufschlämmung, so dass die darin suspendierten Feststoffe aggregieren, wobei die chemische Behandlung die Zugabe einer Quelle für Erdalkalimetall-Ionen zur wässrigen Suspension oder Aufschlämmung vorsieht, dadurch gekennzeichnet, dass die chemische Behandlung weiterhin die Zugabe von Kohlendioxid zur wässrigen Suspension oder Aufschlämmung umfasst, so dass darin ein Niederschlag erhalten wird, der eine im wesentlichen unlösliche weiße Erdalkalicarbonat-Verbindung enthält und der das Material einschließt mit den im Rückstand enthaltenen Farbpartikeln, anorganische Partikeln und Fasern, wodurch die dunkle Färbung des Rückstandes mit der Bildung des Niederschlages schwächer wird.

2. Verfahren nach Anspruch 1, wobei der Niederschlag Calciumcarbonat enthält, das bei der Umsetzung von Kohlendioxid mit Calciumhydroxid in der Suspension entsteht.

3. Verfahren nach Anspruch 1, wobei der Niederschlag mit dem eingefangenen Material zur weiteren Verwendung als teilchenförmiges Beschichtungs- oder Füllstoffmaterial rezykliert wird.

4. Verfahren nach Anspruch 3, wobei der Niederschlag mit dem eingefangenen Material direkt in vergleichsweise verdünnter Form zur Ergänzung des Füllstoffs rezykliert wird, welcher in einem bahnerzeugenden Verfahren eingesetzt wird.

5. Verfahren nach Anspruch 3, wobei die wässrige Suspension, die den Niederschlag mit einem eingefangenen Material enthält, entwässert wird.

6. Verfahren nach Anspruch 1, wobei der Niederschlag mit dem eingefangenen Material vom Wasser der wässrigen Suspension abgetrennt wird und das Wasser, das nach der Abtrennung klarer ist als vor der Behandlung zur Erzeugung des Niederschlags darin, für eine Wiederverwendung rezykliert wird.

7. Verfahren nach Anspruch 1, wobei der Rückstand eine Aufschlämmung oder ein Schlamm aus dem Flotationsprozess einer Anlage zum Deinken von Altpapier ist.

8. Verfahren nach Anspruch 1, wobei die wässrige Suspension oder Aufschlämmung, in der der Niederschlag gebildet werden soll, zwischen 2 und 10 Gew.% Feststoff enthält.

9. Verfahren nach Anspruch 1, wobei der Niederschlag mit dem eingefangenen Material 5 bis 95 Gew.% gefälltes Material und 95 bis 5 Gew.% eingefangenes Material enthält.

10. Verfahren nach Anspruch 9, wobei das Gewichtsverhältnis von gebildetem Niederschlag zu darin gefangenen feinteiligem Material im Bereich von 30 zu 70 bis 70 zu 30 liegt.

11. Erzeugnis, das einen im wesentlichen weißen Niederschlag aus einem Erdalkalicarbonat mit darin eingefangenen Farbpartikeln, anorganischen Partikeln und Fasern umfasst und das gemäß dem Verfahren nach einem der vorhergehenden Ansprüche hergestellt ist.

12. Verwendung eines Erzeugnisses nach Anspruch 11 als anorganisches teilchenförmiges Beschichtungs-, Füllstoff- oder Extendermaterial.

13. Zusammensetzung zur Papierherstellung, umfassend Cellulosefasern, die beschichtet oder gefüllt sind mit einem Material, das ein Erzeugnis nach Anspruch 11 enthält.

**Revendications**

1. Procédé de traitement d'un rejet issu d'une installation de désencrage de vieux papiers, ce rejet comprenant un mélange de particules d'encre, de particules minérales et de fibres, le procédé comprenant l'étape consistant à traiter chimiquement une suspension ou une pâte aqueuse comprenant ledit rejet afin d'y agréger les solides en suspension, le traitement chimique comprenant l'ajout d'une source d'ions de métal alcalino-terreux dans la suspension ou la pâte aqueuse, caractérisé en ce que le traitement chimique comprend également l'ajout de dioxyde de carbone dans la suspension ou la pâte aqueuse afin d'y former un précipité comprenant un composé blanc substantiellement insoluble de type carbonate de métal alcalino-terreux qui entraîne le matériau comprenant des particules d'encre, des particules minérales et des fibres contenu dans le rejet, provoquant ainsi une diminution de la noirceur du rejet grâce à la formation du précipité.

2. Procédé selon la revendication 1, dans lequel le précipité comprend du carbonate de calcium formé par la réaction entre le dioxyde de carbone et l'hydroxyde de calcium dans ladite suspension.

3. Procédé selon la revendication 1, dans lequel le précipité et le matériau entraîné dans le précipité sont recyclés pour être réutilisés comme sauce de couchage ou matériau de charge particulaire.

4. Procédé selon la revendication 3, dans lequel le précipité et le matériau entraîné sont directement recyclés sous forme relativement diluée pour compléter la charge utilisée dans un procédé de formation de feuilles.

5. Procédé selon la revendication 3, dans lequel la suspension aqueuse contenant le précipité et le matériau entraîné est égouttée.

6. Procédé selon la revendication 1, dans lequel le précipité et le matériau entraîné sont séparés de l'eau de la suspension aqueuse et dans lequel l'eau, après séparation, est plus claire que lorsqu'elle est initialement traitée pour subir une précipitation et est recyclée pour être réutilisée.

7. Procédé selon la revendication 1, dans lequel ledit rejet est une pâte ou une boue produite par un procédé de flottation dans une installation de désencrage de vieux papiers.

8. Procédé selon la revendication 1, dans lequel la suspension ou la pâte aqueuse dans laquelle le précipité doit se former contient entre 2% et 10% en poids de matière solide.

9. Procédé selon la revendication 1, dans lequel le précipité et le matériau entraîné contiennent de 5% à 95% en poids de matériau précipité et de 95% à 5% en poids de matériau entraîné dans le précipité.

10. Procédé selon la revendication 9, dans lequel le rapport de la masse de précipité formé à la masse de matériau particulaire fin entraîné par le précipité se situe dans la gamme de 30/70 à 70/30.

11. Produit comprenant un précipité substantiellement blanc comprenant un carbonate de métal alcalino-terreux dans lequel sont entraînées des particules d'encre, des particules minérales et des fibres, dans lequel le produit a été formé par le procédé selon l'une quelconque des revendications précédentes.

12. Utilisation d'un produit selon la revendication 11 comme sauce de couchage particulaire minérale, comme matériau de charge ou comme matériau de dilution.

13. Composition de fabrication de papier comprenant des fibres cellulosiques enduites ou chargées avec un matériau comprenant le produit selon la revendication 11.